# EUROPEAN PATENT APPLICATION

(11) **EP 2 466 718 A1**
(43) Date of publication of application: **20.06.2012**
(21) Application number: 10368048.4
(22) Date of filing: 16.12.2010
(51) Int. Cl.: H02J 7/00

(54) **Multiple battery charger with automatic charge current adjustment**

(71) Applicant: Dialog Semiconductor GmbH, 73230 Kirchheim/Teck-Nabern (DE)
(72) Inventor: Marschalkowski. Eric, 82266 Inning a.A. (DE); Plankensteiner, Manfred, 82110 Germering (DE)
(74) Representative: Schuffenecker, Thierry

(57) **Abstract**

Systems and methods using the same to achieve a multiple battery charger with automatic charge current adjustment have been disclosed. The invention maintains equilibrium of charge levels during charge and discharge between all of the multiple batteries (4). For each battery (4) a charger block (31) comprising a unidirectional means (33) and a current source (34) for charging is assigned. The on-resistance of each charger block is automatically splitting the charge current available to the various batteries (4) thus maintaining an equilibrium of charge levels of the batteries (4), i.e. supporting the battery (4) with the lowest charge level with the highest charge current until equilibrium is reached.

## Description

### Technical Field

This invention relates generally to charging of batteries and relates more specifically to multiple battery chargers having automatic charge current adjustment.

### Description of the Prior Art

Battery powered small electronic devices such as mobile phones, personal music players; mobile computers are gaining more and more popularity. These devices need to be recharged quite often to remain functional.

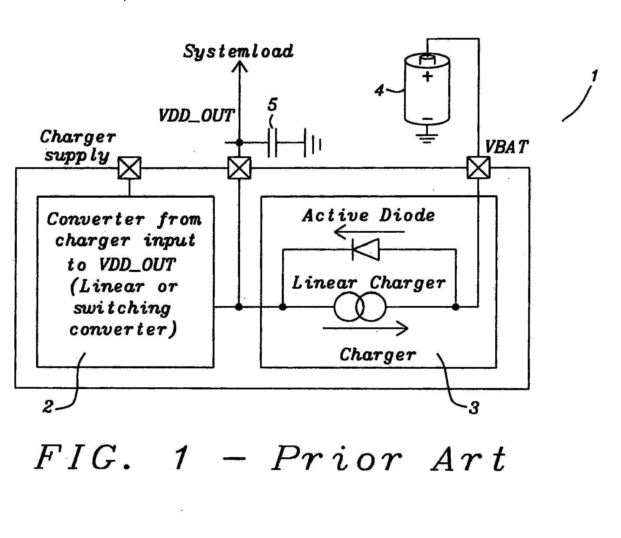

Most battery charger circuits for portable devices with embedded or non-frequently changed batteries support only one battery as shown below
**Fig. 1** **prior art** shows a typical charger circuit **1** comprising a linear or switching converter **2** converting a charger supply voltage to a **VDD_OUT** voltage as required by a system load and by a battery charger **3** charging a battery **4** with an output voltage **VBAT**. An output capacitor **5** is smoothing the output voltage **VDD_OUT.**

This approach is limiting the system to only one battery, which does restrict the possibilities to design the shape of a handheld device as desired by customers. Examples for such devices are mobile phones or MP3 players

Multiple batteries can be charged for other portable devices. This is achieved by multiple charger blocks, which independently charge each battery. This also requires a separate charge current control and the system supply must be strong enough to support all battery currents in parallel as e.g. described by U.S. Patent U.S. 5, 486,749 by Brainard.

In this case, the system voltage must always be high enough to charge each battery and in addition the delivered current out of the input voltage regulator needs to be higher as the maximum system load and the battery currents to avoid, that the system supply will be crow bared.

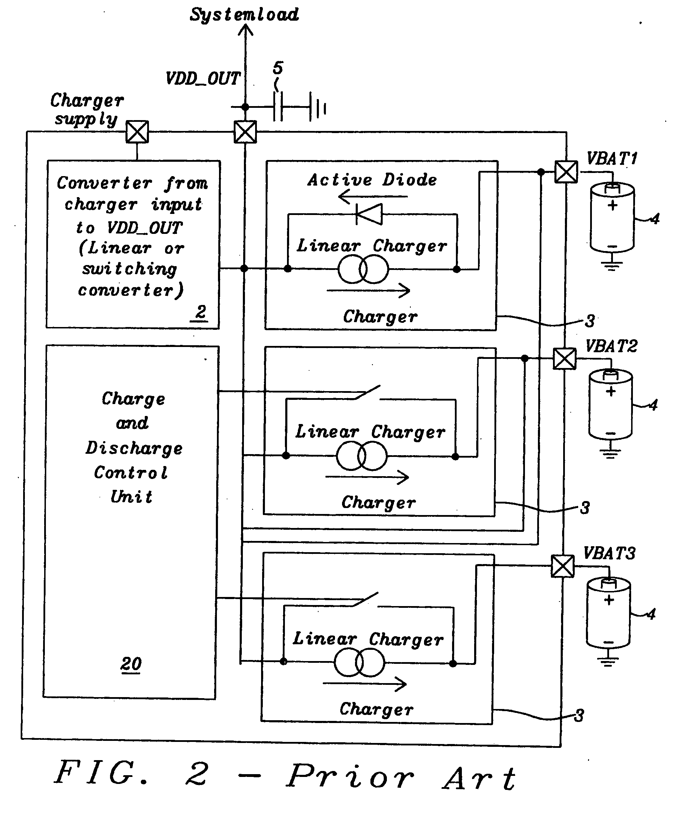

As example **Fig. 2** **prior art** shows such a system for charging multiple battery cells **4** comprising a converter **2** converting from charger supply to **VDD_OUT** voltage, a charge and discharge control unit **20,** and for each battery cell **4** a charger **3.** This control unit **20** decides which battery is active and controls the charge of the active battery. Each battery cell **4** shown in **Fig. 2** **prior art** has its own connection towards the system supply and the system can decide, which battery to use. It is also possible to run the system with only one of the batteries.

There are known patents dealing with the charging of multiple batteries:
U. S. Patent (US 6,768,286 to Trembley) proposes a battery charger method and apparatus for providing detailed battery status and charging method information for a selected one of multiple batteries that are simultaneously coupled to the battery charger. The battery charger includes a controller. The controller selects one of the batteries to monitor and charge. The controller then starts a measurement cycle for the selected battery. During the measurement cycle, the controller determines current battery characteristics of the selected battery. The controller determines whether the selected battery is ready for charging by determining whether the battery characteristics of the selected battery are within a specified range. If the controller determines that the selected battery is ready for charging, the controller causes the battery charger to start charging the battery. If the controller determines that the selected battery is not ready for charging, the controller selects another battery to monitor and charge. Detailed information about the selected battery may be provided from the controller to a processor that is external to the controller.
U. S. Patent (US 6,456,044 to Darmawaskita) discloses a single integrated circuit package for controlling the charging circuits of a battery charger. The single integrated circuit package comprises a microcontroller, switch mode power supply controller(s), analog to digital converter and analog input multiplexer which may be fabricated on a single integrated circuit die, or the microcontroller may be on one integrated circuit die, and the remaining aforementioned circuits may be on a second integrated circuit die. The switch mode power supply controller is adapted for connection to a power converter, which is used to control the voltage and/or current to a battery being charged. The power converter may also be on the same integrated circuit die as the switch mode power supply controller, or may be on a separate semiconductor die but included in the single integrated circuit package. Single or multiple batteries may be charged using charging algorithms specifically tailored to each battery. Batteries being charged may have a different capacity, voltage, or chemistry type. State of charge and time to reach a fully charged condition for each battery may also be different.
U. S. Patent (US 6,445,159 to Ramsden) describes a circuit for charging multiple batteries simultaneously. The circuit monitors the amount of current being delivered to a first battery and compares it to a maximum available current. The circuit then delivers the difference to at least a second battery. The circuit includes a current sensing resistor and comparator for actuating a series switch to electrically couple and decouple a second battery depending upon the demands of the first battery. An optional microprocessor can manipulate a reference threshold to allow simultaneous charging of multiple batteries. The invention greatly reduces the time needed to charge a primary and spare battery.
U. S. Patent (US 5,486,749 to Brainard) discloses a battery charging system that includes an efficient switch mode power supply, multiple linear current limiters, and feedback means to allow the switch mode power supply to operate at the minimum voltage necessary to operate a power load and charge batteries. Furthermore, the switch mode power supply is capable of producing the maximum power required by the system, such as when the battery charger is used in conjunction with operation of an electronic device with peak load demands such as when a hard disk is accessed in a portable computer. Two control mechanisms are found in the battery charging system. The first mechanism is an input used to control the switch mode power supply output voltage from an external source. In one embodiment, this is done by referencing a first voltage to that internal to the switch mode power supply. The second mechanism is to limit the current within the switch mode power supply not controlled by an external source. This current limiting feature is linear and is set at an absolute limit point. Each limiter supplies charge current to a battery, which charge current is monitored and compared to a reference voltage with the resulting error voltage used to control the output of a series pass controller, such as a transistor.
   It should be understood that Brainard discloses a charge mode of multiple battery cells in parallel. Each battery requires its own control unit and most important the provided current must be higher as the required current.
U. S. Patent (US 6,081,096 to Barkat et al.) discloses a device including detachable main and auxiliary batteries and a circuit for discharging and charging the batteries. Two batteries are charged in sequence. Discharging is accomplished by an auxiliary switch that connects the auxiliary battery to power the device, a detector, and a main switch that connects the main battery to power the device, without interruption, when the auxiliary battery drops below a predetermined voltage as determined by a detector. Charging is performed by switches, an internal charger, and a controller. When both batteries are attached, the controller uses the switches to select and couple charging current generated by the internal charger to the main battery. Once charged, the controller switches to charge the auxiliary battery.
U. K. Patent (GB 224 2794 to Ashworth) teaches an apparatus for charging a main NiCd battery B1 in a portable electronic apparatus, specifically a cellular radio telephone, and also a spare NiCd battery B2 first fast charges battery B1 until a predetermined charge state is reached, where after battery B2 is fast charged until it reaches the predetermined charge state. Both batteries B1 and B2 are charged according to a priority sequence. Battery B1 is then trickle charged until the telephone is removed from the apparatus, whereupon battery B2 is trickle charged. The apparatus may have a base unit into which the telephone and battery B2 can be plugged, and a charging current supply separably coupled to base by connectors so that the supply can also be used on its own.

### Summary of the invention

A principal object of the present invention is to achieve methods and systems to achieve a charger of multiple batteries with automatic current adjustment

A further object of the present invention is to achieve a charger maintaining equilibrium of charge levels between multiple batteries during charge and discharge.

A further object of the present invention is to achieve an automatic control method for multiple battery charging

Another further object of the present invention is to achieve self-balancing of the charge currents of multiple batteries wherein the on-resistance of multiple charger blocks is naturally splitting the available charge to various batteries.

In accordance with the objects of this invention a method to charge multiple batteries of a mobile electronic device by automatically balancing charge and discharge of each battery has been achieved. The method invented comprises, firstly, the following steps: (1) providing a system supplying current to a system load of a electronic mobile device and charging multiple batteries comprising a voltage converter, a voltage comparator, and a charge block for each battery to be charged, (2) connecting said system to a charger supply, and (3) comparing, initially only, right after connecting the system to a charger supply, if voltages of one or more batteries are well above voltages of other batteries and, if so, go to step (4), else go to step (5). The next steps of the method are (4) balancing the charge level of the batteries without supplying charge current from the voltage converter until the charge levels of all batteries are the same, and (5) charging the batteries by a charge current from the voltage converter by self-balancing the charge current for each battery by naturally splitting the available charge current depending upon the on-resistances of each charger block in order get a same charge level for each battery. The last steps of the method are (6) checking, if all batteries are fully charged and, if so, go to step (7) else go to step (5), and (7) discontinue charging the batteries and provide current required for the system load by voltage converter until voltage converter is plugged-off.

In accordance with the objects of this invention a system for charging any number N multiple batteries of a mobile electronic device by automatically balancing charge and discharge of each battery has been achieved, The system invented comprises, firstly a voltage converter receiving a charger supply voltage and providing a DC voltage as required by the electronic device, and a voltage comparator comparing, only initially after plug-in of the charger supply voltage, an actual output voltage of the voltage converter with an expected output voltage of the converter, and issuing a wait signal to N charger blocks, if the actual output voltage of the system is higher than the initially expected output voltage of the converter. Furthermore the system comprises said N charger blocks, wherein each of the charger blocks is connected to a first terminal of a correspondent battery, each charger block comprising an unidirectional means to allow one or more a batteries to deliver current to the electronic device and to other batteries, and a means of current source to provide a charge current to the correspondent battery.

### Description of the drawings

In the accompanying drawings forming a material part of this description, there is shown:
**Fig. 1** **prior art** shows a typical charger circuit charging one single battery cell.
**Fig. 2** **prior art** shows such a system for charging multiple battery cells.
**Fig. 3** shows a block diagram of the multiple battery charger invented.
**Fig. 4** illustrates how the self-balancing of the present invention works in case the battery voltage **VBAT1** of the first battery is close to the battery voltage **VBAT2** of the second battery.
**Fig. 5** illustrates how the self-balancing of the present invention works in case the battery voltage **VBAT1** of the first battery is well above the battery voltage **VBAT2** of the second battery.
**Fig. 6** illustrates a flowchart of a method invented for a rotation-based first order noise-shaping DEM technique for use with 3-level DAC unit elements.

### Description of the preferred embodiments

The preferred embodiments disclose methods and systems for a battery charger circuit to support multiple parallel batteries automatically and treating them similar to a single battery after the batteries did reach equilibrium - which is done automatically. This means, that after an initialization phase, which will start automatically after inserting a battery, the system is charging the parallel batteries the same way as a single battery.

A key advantage of the present invention is that an automatic regulation scheme does not need any software or user interaction. Furthermore it supports different charging states of batteries and automatically balances charge and discharge form each battery and does automatically adjust when connected first.

The charger block (active diode and linear charger block and connection to the End-of-Charge (EOC) DAC can be implemented instantaneously multiple times. This solution does therefore support charging and discharging any number of batteries without restriction.

The regulation concept invented does not need special user interaction. It can cope with different type of batteries and initial charge level. The regulation will self adjust the output voltages of the batteries after first connection. The self-balancing does occur during charge and discharge mode automatically.

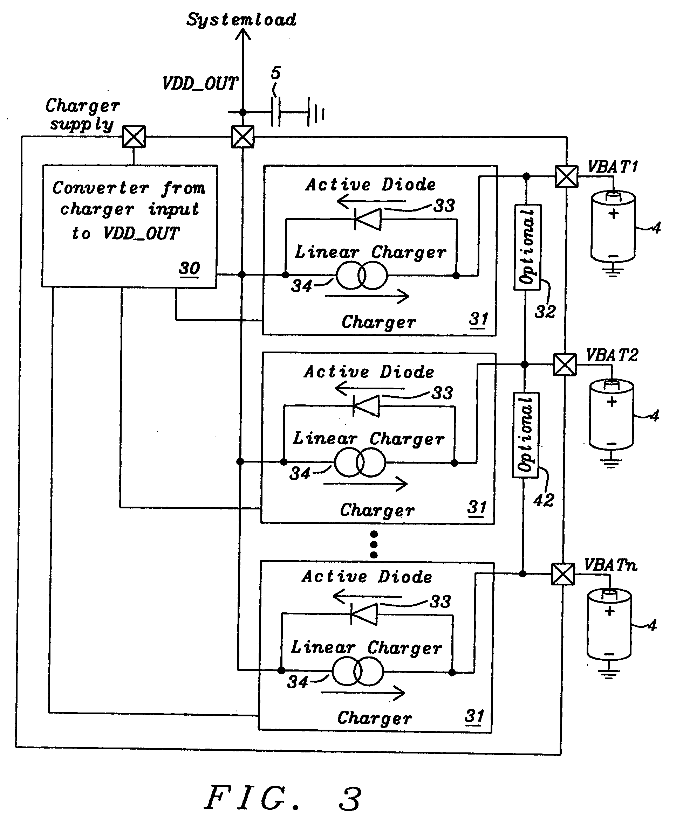

**Fig. 3** shows a block diagram of the multiple battery charger invented. It comprises a converter **30** converting a charger input voltage to **VDD_OUT** voltage supporting a system load of an electronic device. The converter **30** could be a linear converter or a switching converter. Alternatively the converter **30** could be an AC-DC converter also.

A charger block **31** is provided for each battery 4 to be charged. Each charger block comprises an active diode **33** and a linear charger **34.**

Via the active diode **33** or any other unidirectional means of the correspondent charger block **31** a correspondent battery **4**, having a battery voltage higher than **VDD_OUT,** can provide the current required for the system load or for charging other batteries having a lower charge level. As it is known in the art an active diode is a circuit which can generally be directly substituted for an ordinary diode but with improved characteristics, as e.g. a reduced the diode forward voltage drop.

In a preferred embodiment of the invention switching charger **34** provide constant-current/constant-voltage charging. The charging current can be user set and can be sensed internally. Other types of chargers could be alternatively deployed as well, such as e.g. linear chargers.

Optional resistors **32** or other means of resistance between the batteries can be deployed to achieve equilibrium during discharge.

It should be noted that a charge and discharge control block **20,** which is constantly controlling the charge currents, as shown in **Fig. 2** **prior art** is not required with the present invention.

In a preferred embodiment of the present invention **VDD_OUT** voltage is regulated initially by the converter **30** to Vbatmin plus a "safety voltage" of e.g. 0.2 V as the minimum supply. Vbatmin is the minimum voltage required by the system.

The initial regulation is setting the voltage a little bit higher than Vbatmin, this "safety voltage" of 0.2 V mentioned above could also be e.g. 0.15 V or 0.25 V or in the order of magnitude of about 5-7% higher as Vbatmin as well. Different percentages are also possible. This approach does always charge the lowest battery with the highest charge current and batteries with higher voltages do join in later depending on their charge status.

This regulation concept allows the self-balancing of the charge currents depending on the charge state of each individual battery. This means that the ON-resistance of each charger block is naturally splitting the available charge current from the converter **30** to the various batteries. In order to achieve an equilibrium of charge levels by self-balancing the batteries the regulation of the present invention provides the highest charge current to the battery with the lowest level of charge until equilibrium charge levels has been reached.

This concept is especially suited for application of switching chargers **34** in the charging blocks **31,** because the conversion of the charger supply to VDDOUT adjustment to the lowest battery voltage, as e.g. Vbatmin + e.g. 0.2 V, improves the overall efficiency of the charger system.

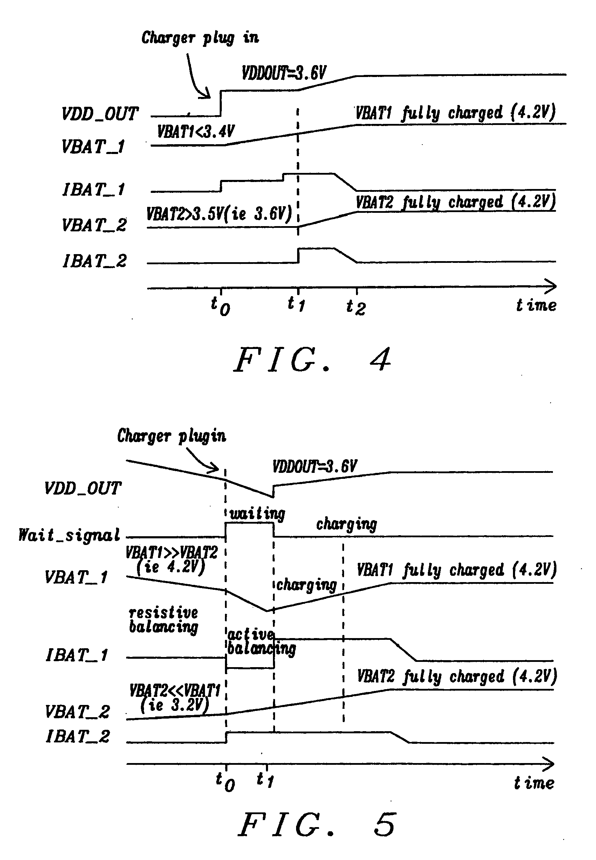

**Fig. 4** illustrates how in the self-balancing of the present invention works, i.e. **Fig. 4** represents a situation wherein a battery voltage **VBAT1** of a first battery is close to a battery voltage **VBAT2** of a second battery. In order to avoid unnecessary complexity **Fig. 4** shows an example of two batteries only, it has to be understood that more than two batteries can be supported by the present invention the same way as well.

**Fig. 4** shows the output voltage of the charger circuit **VDD_OUT,** the battery voltage **VBAT1** of a first battery, a charge current **IBAT1** of the first battery, the battery voltage **VBAT2** of a second battery, and a charge current **IBAT2** of the first battery. **Fig. 4** illustrates a case wherein the voltages of both batteries are close together.

At the point of time **t0** the charger unit is plugged in, **VDD_OUT** rises to an initial voltage of e.g. 3.6 V, the first battery has a voltage **VBAT_1** of below 3.4 V and the second battery has a voltage **VBAT_2** higher than 3.5 V, e.g. 3.6 V. The invention is of course not limited to these voltages of 3.6 V, 3.5 V, or 3.4 V. These are typical examples only.

Since initially the voltage **VBAT1** is lower than **VBAT2,** only the first battery is charged, hence **IBAT1** rises in two steps, while **IBAT2** remains low and subsequently **VBAT1** rises until **VBAT1** equals **VBAT2** at the point of time **t1** indicated by the vertical dotted line in **Fig. 4****.** As soon as **VBAT1** equals **VBAT2** the charging current **IBAT2** rises also charging the second battery. Both batteries are fully charged at point of time **t2** and equilibrium of charge levels, i.e. battery voltages, is reached. Hence both charge currents **IBAT1** and **IBAT2** fall back to zero.

If one of the batteries is well above, e.g. 100mV, the lowest battery, the automatic regulation concept does first balance the battery charge status and the charger circuit is put into a wait condition. As soon as the balancing did occur, the **VDD_OUT** voltage regulation does start to work and begins to charge as described in the case illustrated in **Fig. 4****.** It should be noted that, whenever there are different voltages of the batteries, the batteries must balance the charge status independently of the absolute voltage.

**Fig. 5** illustrates how the self-balancing of the present invention works in case the battery voltage **VBAT1** of the first battery is well above the battery voltage **VBAT2** of the second battery. **Fig. 5** shows the output voltage of the charger circuit **VDD_OUT,** a **WAIT** signal, the battery voltage **VBAT1** of a first battery, a charge current **IBAT1** of the first battery, the battery voltage **VBAT2** of a second battery, and a charge current **IBAT2** of the first battery.

In case one of the batteries is well above the lowest battery, the automatic regulation concept does first balance the battery charge status and the charger circuit is put into a wait condition. As soon as the balancing has been performed at t1, the VDD_OUT voltage regulator does start to work and begins to charge as described in case 1. In an example of a preferred embodiment "well above" means a difference in the order of magnitude of greater than 100mV, "close to" means a difference in the order of magnitude of less than 100mV. These definitions can differ according to specific requirements of the charger system invented.

The **VDD_OUT** voltage converter 3 detects the wait condition by a comparison of the output voltage of the batteries. Alternatively the VDD_OUT voltage regulator detects the wait condition by a comparison of the expected output voltage and the actual output voltage of VDD_OUT"

This is possible, because the highest battery (if above VBATxmin+0.2) does overdrive the **VDD_OUT** node via its active diode circuitry automatically between **t0** and **t1.**

The wait period is finished if the batteries are close together, e.g. in the order of magnitude of 100mV.

This Wait-condition is only happening with completely different battery charge status and only at the very beginning. Still the system does allow full operation even under that special condition.

It should be noted that a VDD_OUT comparator is the only additional control part of the charger unit, which has to be instantiated one time only. All other blocks are fully scalable.

Referring to **Fig. 5****,** during a time frame before a plug-in of the charger at **t0,** the current required by a system load is provided by the first battery because VBAT1 is high enough to support the system load. Also a resistive balancing of the voltages of **VBAT1** and **VBAT2** starts via the optional resistors **32** shown in **Fig. 3****.** Balancing is performed by discharging the battery with the highest battery voltage.

A wait signal is issued by the comparator as soon as the charger unit has been plugged-in because the actual VDD_OUT voltage is higher than the initially expected output voltage of the converter. During the wait phase between **t0** and **t1** an active balancing between the first and second battery is performed, the charge level of the first battery is decreasing and the charge level of the second battery is increasing accordingly, because energy of the first battery is transferred to the second battery. During the wait period current **IBAT2,** charging the second battery, is provided by the first battery, therefore current **IBAT1** is negative in **Fig. 5****. It** should be noted that, in case the second battery is empty, equilibrium between both batteries is established first and then charging of the batteries starts. In case charging of the second battery would start at once equilibrium between the batteries may be lost.

Optionally resistive balancing can be used as shown in a first phase of **Fig. 5****.** This is only possible if the optional resistors **32** and **42,** indicated in **Fig. 3****,** are deployed. During the resistive balancing the battery voltages are coming closer together via the resistors **32** and **42.** At point of time **t0** the charger supply is plugged in. During the waiting period between **t0** and t1 an equilibrium between the voltages of both batteries is established by an active balancing, i.e. charging the second battery **BAT_2** by **IBAT_1.** In the following period both batteries are in equilibrium, i.e. having a same charge. Starting to charge battery **BAT_2** right away without a preceding balancing period would lead to a complete unbalanced system.

At the end of the wait period at time **t1** the charge status of both batteries is balanced and both batteries are charged by the currents **IBAT1** and **IBAT2** until they are fully charged, e.g. to 4.2 V. During this charging period VDD_OUT voltage rises also accordingly.

In regard of discharge of the batteries every portable system benefits from low ohmic connection of the batteries to the load. This parallel battery concept reduces the resistance between battery and load due to the multiple active diode circuits. As each battery will self discharge with different time constants, this system allows to align all charge levels of the batteries using an optional resistor or any kind of ohmic connection in between each of the batteries.

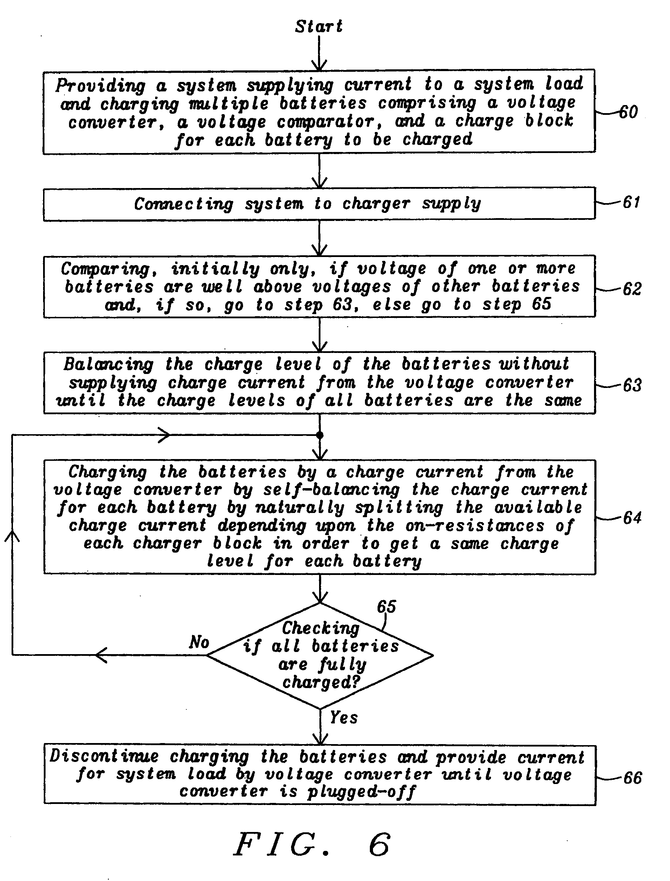

**Fig. 6** illustrates a flowchart of a method invented to charge multiple batteries of a mobile electronic device by automatically balancing charge and discharge for each battery. A first step **60** describes the provision of a system supplying current to a system load of an electronic mobile device and charging multiple batteries comprising a voltage converter, a voltage comparator, and a charge block for each battery to be charged. The next step **61** illustrates connecting the system to a charger supply voltage. The following step **62** describes comparing initially only, right after connecting the system to a charger supply, if voltages of one or more batteries are well above voltages of other batteries and, if so, go to step **63,** else go to step **64.** Step **63** describes balancing the charge level of the batteries without supplying charge current from the voltage converter until the charge levels of all batteries are the same. In step **64** the batteries are charged by a charge current from the voltage converter by self-balancing the charge current for each battery by naturally splitting the available charge current depending upon the on-resistances of each charger block in order get a same charge level for each battery. The last step **65** describes checking if all batteries are fully charged and, if so, go to step **67,** else go to step **64.** Step **67** illustrates discontinuing charging the batteries and providing current for system load by voltage converter until voltage converter is plugged-off and system load is supported by the batteries.

While the invention has been particularly shown and described with reference to the preferred embodiments thereof, it will be understood by those skilled in the art that various changes in form and details may be made without departing from the spirit and scope of the invention.

## Claims

1. A method to charge multiple batteries of a mobile electronic device by automatically balancing charge and discharge of each battery comprising the following steps:
(1) providing a system supplying current to a system load of an electronic mobile device and charging multiple batteries comprising a voltage converter, a voltage comparator, and a charge block for each battery to be charged;
(2) connecting said system to a charger supply;
(3) comparing, initially only, right after connecting the system to a charger supply, if voltages of one or more batteries are well above voltages of other batteries and, if so, go to step (4), else go to step (5);
(4) balancing the charge level of the batteries without supplying charge current from the voltage converter until the charge levels of all batteries are the same;
(5) charging the batteries by a charge current from the voltage converter by self-balancing the charge current for each battery by naturally splitting the available charge current depending upon the on-resistances of each charger block in order get a same charge level for each battery;
(6) checking, if all batteries are fully charged and, if so, go to step (7) else go to step (5); and
(7) discontinue charging the batteries and provide current required for the system load by voltage converter until voltage converter is plugged-off.

2. The method of claim 1 wherein said balancing the charge level of the batteries without supplying charge current is initiated by a wait signal;

3. The method of claim 1 wherein said wait signal is set according to a comparison of the voltages of the batteries.

4. The method of claim 1 wherein said wait signal is set according to a comparison of the expected output voltage with the actual output voltage.

5. The method of claim 1 wherein said balancing the charge level of the batteries without supplying charge current from the voltage converter is performed until the voltage levels of all batteries are within a range in the order of magnitude of 100mV.

6. The method of claim 1 wherein each battery has its own connection the system load and to the output of said converter.

7. The method of claim 1 wherein said system load can be supported by only one battery.

8. The method of claim 1 wherein the method for charging multiple batteries does not need any software or can be applied for any number of batteries.

9. The method of claim 1 wherein the output voltage of said voltage is set to is a minimum voltage required by the system plus a safety voltage of about 6 percent of said minimum voltage.

10. The method of claim 1 wherein said system load can operate also during said balancing of the charge level of the batteries without supplying charge current

11. The method of claim 1 wherein an initialization phase starts automatically after inserting a battery,

12. A system for charging any number N multiple batteries of a mobile electronic device by automatically balancing charge and discharge of each battery, comprises:
a voltage converter receiving a charger supply voltage and providing a DC voltage as required by the electronic device;
a voltage comparator comparing, only initially after plug-in of the charger supply voltage, an actual output voltage of the voltage converter with an expected output voltage of the converter, and issuing a wait signal to N charger blocks if the actual output voltage of the system is higher than the initially expected output voltage of the converter; and
said N charger blocks, wherein each of the charger blocks is connected to a first terminal of a correspondent battery, each comprising:
an unidirectional means to allow one or more a batteries to deliver current to the electronic device and to other batteries; and
a means of current source to provide a charge current to the correspondent battery.

13. The system of claim 12 wherein said voltage converter is a linear converter or a switched converter.

14. The system of claim 12 wherein said unidirectional means is a diode, or an active diode circuit.

15. The system of claim 12 wherein said means of current source is a linear charger circuit or a switched charger circuit.
